# EUROPEAN PATENT SPECIFICATION

(11) **EP 3 740 365 B1**
(45) Date of publication and mention of the grant of the patent: **08.03.2023**
(21) Application number: 19700172.0
(22) Date of filing: 09.01.2019
(51) Int. Cl.: B29C 45/14, F16F 7/12, B29C 65/00

(54) **PROCESS FOR PRODUCING A COMPOSITE COMPONENT**
VERFAHREN ZUR HERSTELLUNG EINER VERBUNDKOMPONENTE
PROCÉDÉ DE FABRICATION D'UN COMPOSANT COMPOSITE

(30) Priority: 19.01.2018 EP 18152609
(43) Date of publication of application: 25.11.2020
(73) Proprietor: BASF SE, 67056 Ludwigshafen am Rhein (DE)
(72) Inventor: WUEST, Andreas, 67056 Ludwigshafen (DE)
(86) International application number: PCT/EP2019/050423
(87) International publication number: WO 2019/141560

(56) References cited:
- EP-A1- 0 681 898
- WO-A1-2014/067604
- JP-A- H08 142 114
- JP-A- 2003 236 875
- JP-A- 2013 111 969
- US-A- 5 169 581

## Description

The invention relates to a process for producing a composite component comprising an insert and a plastics part made of a thermoplastic polymer, wherein the plastics part at least partly encloses the insert, the process comprising:
(a) placing the insert part into an injection mold,
(b) closing the injection mold,
(c) injecting the thermoplastic polymer into the mold thereby overmolding the insert at least partly.

Composite components comprising an insert and a plastics part made of a thermoplastic polymer are for example energy-absorbing components. Such energy-absorbing components are used for example in the automobile industry when there is a requirement for controlled dissipation of large quantities of kinetic energy from an impact in order to minimize adverse effects, for example on passengers or important and valuable adjacent structures. The energy is absorbed via deformation and controlled failure of the components, for example in the event of a collision. Because weight reduction is essential in view of the desire to reduce fuel consumption, it is desirable to manufacture the components from lighter materials like plastics. Another requirement in particular for the type of energy-absorbing components used in bumpers is that the components exhibit optimized failure behavior. The aim is to absorb more energy while minimizing installation space.

Such an energy-absorbing component and a process for production of an energy-absorbing component are disclosed for example in WO-A 2017/137480. The energy-absorbing component comprises an insert which is referred to as core structure and a plastics part which is referred to as ancillary structure. The core structure is made of a metal or a polymer reinforced with continuous-filament fibers and the ancillary structure is made of a polymer material being unreinforced or reinforced with short fibers or with long fibers.

Further energy-absorbing structures are disclosed for example in WO 2014/067604 A1, WO-A 2012/140151, FR-A 2 936 469, EP-A 1 316 409, EP-A 2 380 782, WO-A 2016/177440 or WO-A 2016/176319. Most of these energy-absorbing structures are made of a polymer and the energy-absorbing effect results from a complex geometry of the energy-absorbing structure.

Providing a composite component as energy-absorbing structure has the advantage that due to the different materials used for the composite component more complex effects can be implemented. Particularly, by using a composite component it is easier to establish a force-displacement curve being constant or rising in a constant manner.

It has been an object of the present invention to provide a process for producing a composite component which can be adapted to apply predetermined characteristics to the composite component in an easier way as processes known from the art and which further allows to produce composite components having the same outer geometry but different features.

This object is achieved by a process for producing a composite component in accordance with the subject-matter of claim 1.

By using a composite component comprising an insert and a plastics part it is possible to apply complex characteristics for example a force-displacement curve being constant or having a constant rise. The composite component allows applying part of the characteristics to the insert and a part of the characteristics to the plastics part. As the characteristics of the composite component are composed by the characteristics of the insert and of the plastics part it is possible to form the plastics part less complex than in cases where the energy-absorbing component is made only from a reinforced plastic without an additional insert.

The inventive step to modify the insert before placing into the injection mold or in the injection mold before the injection mold is opened to remove the composite component allows to produce less complex inserts and to bring the insert into the final form during the injection process of the polymer material for the plastics part.

A modification of the insert before placing it into the injection mold comprises for example joining or connecting at least two parts of the insert forming the insert by this connection. However if the insert is formed from at least two parts it is not necessary to connect them outside the injection mold. Alternatively and preferred it is also possible to place the parts for the insert in the injection mold and to join them on closing the insert mold. Further it is also possible to join the parts of the insert after the injection mold has been closed, for example by dies which impact on the parts of the insert and push the parts of the insert in the final place before injecting the polymer.

To join the parts of the insert each of the parts comprises a groove along one edge and a tongue along another edge. For joining the parts the tongue of one part is inserted into the groove of the other part and vice versa. This allows a connection of the parts forming the insert without additional fixing devices like screws or bolts or without additional fixing by welding or gluing just by plugging. The plugged insert is finally fixed by the polymer of the plastics part which is injected into the injection mold.

For a symmetric insert along the main axis it is preferred when the parts for the insert all have the same shape and each part comprises one edge in the direction of the main axis having a tongue and a second edge along the direction of the axis having a groove. To join the parts, the tongue of one part is inserted into the groove of an adjacent part.

If the composite component is an energy absorbing component, the main axis denotes the axis in the main direction of action of an impact on the component. This direction is also generally the same as the direction in which the length of the energy-absorbing component is greatest. Besides using parts all having the same shape it is also possible to use parts having different shapes to be joined forming the insert. If the insert is made of two parts, in this case the distance between the tongue and the groove at one part corresponds to the distance of tongue and groove of the second part such that the two parts to be connected fit together. If the insert comprises more than two parts, the respective parts have to be formed in such a way that when connecting the parts the last part to be connected fits into the space left between the parts already joined.

Besides forming the insert from at least two parts which are joined, it is also possible to produce the insert as a split insert and to modify the insert by joining the split insert. If a split insert is used, it is preferred when the insert is connected on one side and it is particularly preferred when the connection comprises a hinge. In this case the insert is folded on the hinge and joined on the edges opposite the hinge.

Alternatively or additionally, the insert is modified by introducing dints, corrugations, folds or openings into the insert. By introducing dints, corrugations, folds or openings into the insert it is possible to modify the characteristics of the insert, particularly stiffness and rigidity. By this modification it is particularly possible to adapt the insert to the needed requirements for the intended use of the composite component.

Particularly when the composite component is used as an energy-absorbing component by introducing dints, corrugations, folds or openings it is possible to adjust the energy-absorption properties, i.e. in particular the force-displacement characteristic.

In context with the present invention the expression force-displacement characteristic means the force required to deform, or to destroy, the energy-absorbing component as a function of the force, of the dimensions of the component resulting from the progressive destruction of the component.

Additionally or as an alternative it is further possible to modify the insert by adding bolts, screws or pins. Adding bolts screws or pins allows fastening further components to the composite component after its production by injection-molding. Further, it is also possible to fasten the composite component on another component, for example if the composite component is an energy-absorbing component on a part of a vehicle body.

If the composite component is used as an energy-absorbing structure, the insert for example has the shape of a tube or a cone frustum. Particularly when the insert is in the shape of a tube, the insert is produced by at least two identical semi-circular parts having one edge being formed as a tongue and one edge being formed as a groove of a tongue-and-groove joint, the parts being connected by inserting the tongue of one part into the groove of the other part to achieve a tubular insert. However, as described above, it is also possible to provide the parts of the insert with any other form so that on connecting the parts a tube is formed having a cross-section being different from a circular cross section. Such a cross section further allows adapting the force-displacement characteristics of the insert to a preset curve.

Besides using parts of the insert having a shape different from a semi-circular shape, for example a zig-zag-shape, an angular shape, an elliptic shape or any other shape, it is also possible to modify the shape of the insert in the injection mold after placing the parts into the injection mold and combining the parts forming a tube, by for example inserting dints, corrugations, folds or openings into the insert and/or to add pins, bolts or screws.

By the design of the composite component with an insert it is possible that for use as an energy-absorbing component also buckling of the insert in the event of transverse forces arising from a non-frontal impact can be prevented. In particular, the modified insert prevents lateral breakaway of the composite component used as energy-absorbing component. The insert therefore is modified in such a way that most of the required energy can be absorbed. The energy absorbed via destruction of the insert can be greater than in case of energy-absorbing components without a specifically modified insert. By the modification of the insert before opening the injection mold a geometry can be applied by which an intended force-displacement characteristic is achieved even in case of an impact which is not precisely frontal, but also comprises a transverse component or lateral component.

As an alternative to inserts having the shape of a tube or a cone frustum, it is also possible to use inserts being undulatory, zig-zag-shaped, or Ω-shaped, or being composed of linear and/or curved sections.

In a planar section perpendicular to the axial direction the insert preferably comprises an edge having a curvature with a radius of curvature that is of the order or magnitude of the smallest achievable by subjecting the material of the insert to a forming process. These edges provide great stability to the insert and in the event of an impact serve as initiation points at which energy is absorbed via controlled destruction of the insert. Besides an edge having a curvature it is also possible to provide an edge of the insert perpendicular to the axial direction having any suitable shape like an undulatory shape or a zig-zag shape. The shape of the edge of the insert can be formed in the injection mold and be a further option to modify the insert before opening the injection mold.

Besides cutting a contour in the edge perpendicular to the axial direction, it is also possible to cut a contour in any other edge of the insert. The contour additionally defines the force-displacement characteristic of the insert and is shaped to a predefined pattern.

The modification of the insert before opening the injection mold can be determined by a simulation calculation, for example by finite difference method, finite element method or finite volume method. Such simulation calculations for determining a suitable shape are well known to a skilled person and can be executed by commercially available computer programs.

The energy-absorbing component must have a certain force-displacement characteristic for its specific intended purpose, and must be suitable for absorption of a prescribed quantity of energy. Another factor requiring consideration in the design of the component is that when the energy acting on the energy-absorbing component is absorbed it is necessary to avoid exceeding a prescribed maximal force, in order to avoid damage to elements arranged behind the energy-absorbing component in the direction of action of the force. Only in very rare cases moreover is it possible to consider the energy-absorbing component in isolation, because it is required to interact with other components at its prescribed usage location. Factors requiring consideration here in the design of the energy-absorbing component are in particular in the exterior dimensions and the arrangement of connection regions. The division of the composite component used as an energy-absorbing component into an insert and a plastics part made of a thermoplastic polymer allows the various requirements to be allocated separately to the insert and the plastics part. This allows for example to vary the geometry of the insert to adapt the composite component to different requirements for example different predetermined force-displacement characteristics by maintaining the outer shape of the composite component. If the composite component is used for example as an energy-absorbing component with identical exterior geometric design in vehicles of different mass which require introduction of a different quantity of energy, the force-displacement characteristic can be scaled via simple change of the at least one core structure. By way of example, it is possible to vary wall thickness, the material of the insert and/or the plastics part or the geometry introduced by modification of the insert without changing the exterior design of the composite component.

Particularly if the composite component is used as an energy-absorbing component in a motor vehicle, it is possible to use shapes and dimensions, and also fastening points, that are standardized across the various types of vehicle, while the force-displacement characteristic and the quantity of energy that can be absorbed is respectively adjusted via different selection of the at least one insert. Equally, it is thus possible to change the design of the composite component in the design of the vehicle without any resultant effects on other components of the vehicle, for example other components fastened on the energy-absorbing component.

The material the insert is manufactured from for example is a metal, a polymer or a ceramic.

If the insert is made of a metal, it is preferred that the insert is made of aluminum. However, further metals which can be used for manufacturing the insert are for example steel, titanium, magnesium.

If the insert is manufactured from a polymer, it is particularly preferred to use reinforced polymers. Suitable reinforced polymers are particularly those being reinforced with continuous-filament fibers. The properties of the composite component in this case additionally can be influenced by appropriate selection of the polymer material reinforced with continuous-filament fibers. In particular the properties can be affected by the used polymer, the fibers, the proportion of the fibers, and/or the orientation of the fibers.

If a polymer material reinforced with continuous-filament fibers is used for manufacturing the insert, the proportion of the fibers is preferably in the range from 1 to 70 % by volume, in particular from 10 to 60 % by volume, and very particularly preferably from 20 to 50 % by volume. The continuous-filament fibers of the first material can have been introduced in one or more layers into the first material. The first material here can by way of example comprise the fibers in the form of a woven fabric, a knitted fabric, a nonwoven, or in the form of parallel-oriented continuous-filament fibers. It is particularly preferably that the fibers are parallel-oriented continuous-filament fibers.

If the fibers are in the form of parallel-oriented continuous-filament fibers, it is for example possible to use what are known as tapes. The continuous-filament fibers present in these have parallel orientation and have been saturated with polymer material. The fibers can be in only one layer or in a plurality of layers. If the fibers are introduced in a plurality of layers, the orientation of the individual layers can be varied with respect to one another in such a way that the individual fiber directions have been rotated in relation to one another. If for example two layers of tapes are used, the angle enclosed between the two different fiber directions can be 90°. If two woven fabrics are mutually superposed it is preferable to rotate the two layers of woven fabric by an angle of 45° with respect to one another, thus giving an angle of 45° between each of the four fiber directions. Preference is given to a symmetrical arrangement of the layers through the thickness of the material.

Embodiments of the invention are shown in the figures and further illustrated in the following description.

In the figures:
- Figure 1: shows one part of an insert,
- Figure 2: shows an insert formed from the part shown in figure 1,
- Figures 3a to 3c: show schematically a process to produce a composite part,

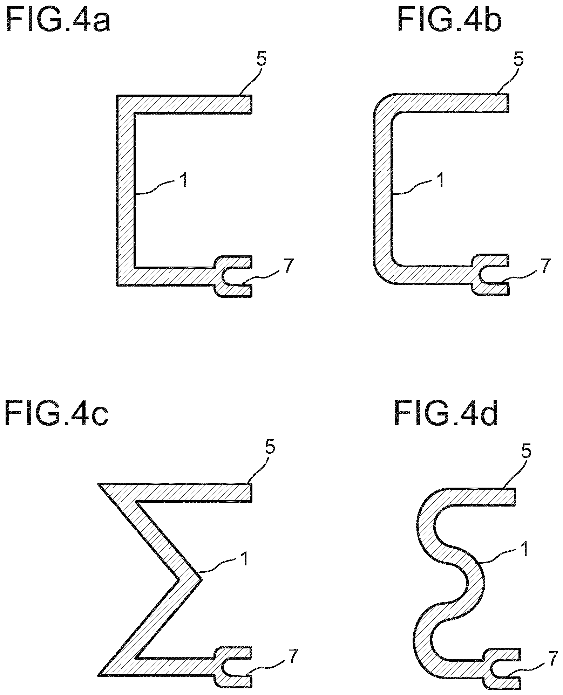

- Figures 4a to 4d: show different cross sections of insert parts.

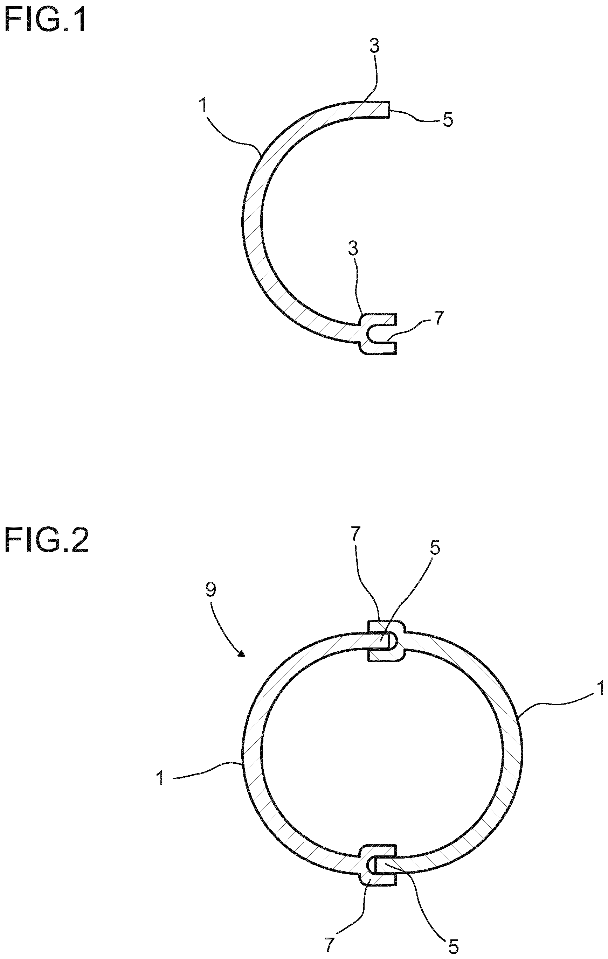

In figure 1 a part of an insert is shown in a cross-sectional view.

A part 1 of an insert as shown in figure 1 has the shape of a semi-circle. This shape allows a production of the part 1 of the insert in a simple manner by extrusion. Particularly, in difference to the production of a hollow body the part 1 of the insert can be formed without using a core in the extrusion die. The part 1 of the insert comprises two edges 3, extending along the part 1 of the insert in axial direction. One of the edges 3 is formed as a tongue 5 and the other edge 3 is formed as a groove 7.

To form the insert, two of the parts as illustrated in figure 1 can be connected, forming a tubular hollow body 9. Such a hollow body is shown in the way of example in figure 2. To form the hollow body, the tongue 5 of one part 1 of the insert is inserted into the groove 7 of the second part 1 of the insert and the tongue 5 of the second part 1 of the insert is inserted into the groove 7 of the first part 1 of the insert, thus forming a tubular hollow body.

The connection of the two parts 1 of the insert can be carried out before placing the insert into an injection mold into which a thermoplastic polymer is injected forming the plastics part or in the mold.

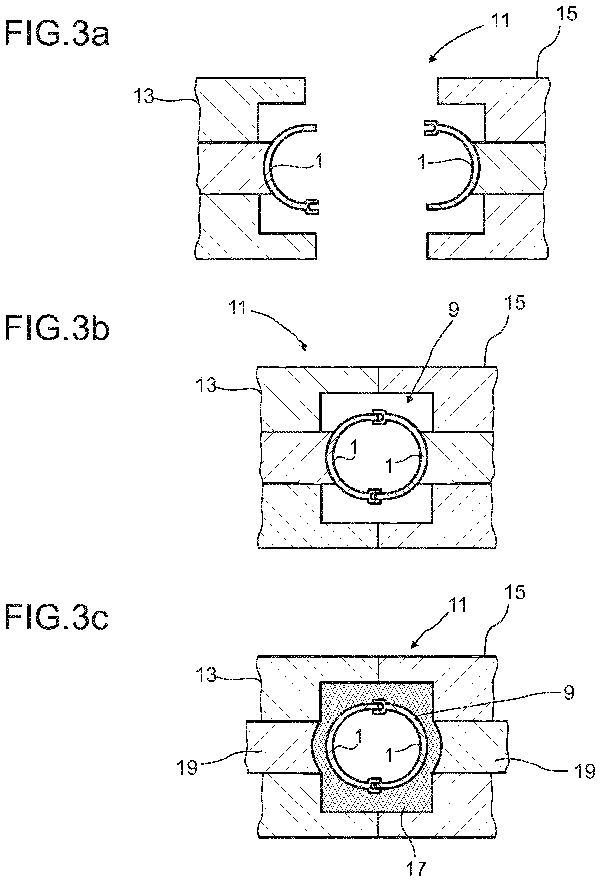

A process to produce the composite part is schematically shown by way of example in figures 3a to 3c.

in a preferred embodiment the parts 1 forming the insert are connected in the injection mold 11 as shown in figure 3a. To connect the parts 1 of the insert in the mold, one part 1 of the insert is placed in one part 13 of the mold 11 and a second part 1 of the insert is placed in a second part 15 of the mold 11. After placing the parts 1 of the insert into the parts 13, 15 of mold 11, the mold 11 is closed as shown in figure 3b. By closing the mold 11, the parts 1 placed into the parts 13, 15 of the mold 11 are connected, forming a hollow body 9 as an insert. In a next step, shown in figure 3c, a thermoplastic polymer is injected into the mold, thereby enclosing at least partly the insert and forming the plastics part 17. To enclose the insert, in figure:3c the hollow body 9, the mold preferably comprises retractable dies 19. The parts 1 of the insert then are placed on the retractable dies 19 to allow forming the insert and after the insert has been formed by connecting the parts 1 of the insert, the retractable dies 19 are retracted opening a space between the insert and the surface of the mold into which thermoplastic polymer can be injected. If the form of the retractable dies does not correspond to the form of the plastics part it is possible for example to further retract the retractable dies 19 and to move an additional part which is not shown here into the mold. Such constructions of molds are well known to a skilled person and already used particularly for producing components made of different polymers which are injected one after the other into the mold.

Additionally or as an alternative it is also possible to modify the insert in a different way in the mold, for example by introducing dints, corrugations, folds or openings into the insert and/or by adding bolts, screws or pins.

The dints, corrugations, folds or openings are introduced for example by pressing a forming die of the mold into the insert and afterwards retract the forming die back into the mold to allow the thermoplastic polymer being injected into the mold for forming the plastics part.

If it is intended to form a contoured edge in the insert, it is possible to provide the mold with a cutter which can cut the contour into the edge of the insert. In this case it is preferred to remove the part cut off the insert from the mold before injecting the thermoplastic polymer. However, depending of the geometry of the composite component it is also possible to keep the part cut off the insert in the mold and remove it after the composite component is removed from the mold.

Besides a semi-circular cross-sectional shape of the part 1 of the insert, the part 1 of the insert can have any other shape. The shape of the part of the insert thereby depends on the features the composite component should fulfil and can be designed by a simulation calculation. Suitable shapes of the part 1 of the insert are shown by way of example in figures 3a to 3d.

The cross-sectional shape of the part 1 of the insert for example can be rectangular as shown in figure 3a or rectangular with rounded edges as shown in figure 3b. Further possible shapes are zigzagged as shown in figure 3c or undulated as shown in figure 3d. However, besides the shown shapes any other shape of the part of the insert is possible.

To form the insert from at least two parts 1 of the insert it is possible to connect at least two identical parts or in the alternative to connect parts 1 of the insert having different shapes. If the parts to connect have different shapes, it is only important that the geometry of the parts 1 of the insert is such that the distance between the tongue and the groove is the same on both parts to connect. The same distance between tongue and groove allows to connect two parts by inserting the tongues of the parts into the grooves of the respective other part. This possibility to connect parts having different shapes allow for achieving different features of the composite component. Besides different shapes it is also possible to connect parts 1 having a similar shape but different cross sectional areas. This also allows adapting the features of the composite component to fulfil preset requirements.

## Claims

1. A process for producing a composite component being an energy-absorbing component comprising an insert and a plastics part (17) made of a thermoplastic polymer, wherein the plastics part (17) at least partly encloses the insert, the process comprising:
(a) placing at least one part (1) of the insert or the insert into an injection mold (11),
(b) closing the injection mold (11),
(c) injecting the thermoplastic polymer into the mold (11) thereby overmolding the insert at least partly,
wherein the insert is modified before placing it into the injection mold (11) or in the insert is modified in the injection mold (11) before the injection mold is opened to remove the composite component, **characterised in that**
the insert is modified by introducing dints, corrugations, folds or openings into the insert, and wherein the insert comprises at least two parts (1) and is modified by joining the at least two parts (1) forming one insert, each of the parts (1) comprising a groove along one edge and a tongue along another edge, wherein for joining the parts, the tongue of one part is inserted into the groove of another part.

2. The process according to claim 1, wherein the insert is split and is modified by joining the split insert.

3. The process according to any of claims 1 or 2, wherein the insert is modified by adding bolts, screws or pins.

4. The process according to any of claims 1 to 3, wherein a contour is cut in at least one edge of the insert.

5. The process according to any of claims 1 to 4, wherein the insert is manufactured from a metal, a polymer or a ceramic.

6. The process according to any of claims 1 to 5, wherein the thermoplastic polymer the plastics part (17) is made of is reinforced.

## Patentansprüche

1. Verfahren zur Herstellung einer Verbundkomponente, die eine energieabsorbierende Komponente ist, die einen Einsatz und einen Kunststoffteil (17) aus einem thermoplastischen Polymer umfasst, wobei der Kunststoffteil (17) den Einsatz wenigstens teilweise umschließt, wobei das Verfahren umfasst:
(a) Platzieren wenigstens eines Teils (1) des Einsatzes oder des Einsatzes in eine Spritzgussform (11),
(b) Schließen der Spritzgussform (11),
(c) Einspritzen des thermoplastischen Polymers in die Form (11), um den Einsatz wenigstens teilweise zu umspritzen,
wobei der Einsatz modifiziert wird, bevor er in der Spritzgussform (11) platziert wird, oder im Einsatz in der Spritzgussform (11) modifiziert wird, bevor die Spritzgussform geöffnet wird, um die Verbundkomponente zu entnehmen, **dadurch gekennzeichnet, dass**
der Einsatz durch Einführen von Einbeulungen, Wellen, Falten oder Öffnungen in den Einsatz modifiziert wird und wobei der Einsatz wenigstens zwei Teile (1) umfasst und durch Verbinden der wenigstens zwei Teile (1) modifiziert wird, um einen Einsatz zu bilden, wobei jeder der Teile (1) eine Rille entlang einer Kante und eine Zunge entlang einer anderen Kante umfasst, wobei zum Verbinden der Teile die Zunge eines Teils in die Rille eines anderen Teils eingeführt wird.

2. Verfahren gemäß Anspruch 1, wobei der Einsatz geteilt ist und durch Verbinden des geteilten Einsatzes modifiziert wird.

3. Verfahren gemäß einem der Ansprüche 1 und 2, wobei der Einsatz durch Hinzufügen von Bolzen, Schrauben oder Stiften modifiziert wird.

4. Verfahren gemäß einem der Ansprüche 1 bis 3, wobei in wenigstens eine Kante des Einsatzes eine Kontur geschnitten wird.

5. Verfahren gemäß einem der Ansprüche 1 bis 4, wobei der Einsatz aus einem Metall, einem Polymer oder einer Keramik gefertigt ist.

6. Verfahren gemäß einem der Ansprüche 1 bis 5, wobei das thermoplastische Polymer, aus dem der Kunststoffteil (17) besteht, verstärkt ist.

## Revendications

1. Procédé de production d'un composant composite qui est un composant absorbant l'énergie comprenant une pièce rapportée et une partie en plastique (17) constituée d'un polymère thermoplastique, la partie en plastique (17) enfermant au moins partiellement la pièce rapportée, le procédé comprenant :
(a) la mise en place d'au moins une partie (1) de la pièce rapportée ou de la pièce rapportée à l'intérieur d'un moule d'injection (11),
(b) la fermeture du moule d'injection (11),
(c) l'injection du polymère thermoplastique à l'intérieur du moule (11) pour surmouler ainsi au moins partiellement la pièce rapportée,
dans lequel la pièce rapportée est modifiée avant d'être placée à l'intérieur du moule d'injection (11) ou dans la pièce rapportée est modifiée dans le moule d'injection (11) avant que le moule d'injection soit ouvert pour retirer le composant composite, **caractérisé en ce que**
la pièce rapportée est modifiée par introduction d'entailles, d'ondulations, de plis ou d'ouvertures à l'intérieur de la pièce rapportée, et dans lequel la pièce rapportée comprend au moins deux parties (1) et est modifiée par assemblage des au moins deux parties (1) formant une pièce rapportée, chacune des parties (1) comprenant une rainure le long d'un bord et une languette le long d'un autre bord, dans lequel, pour assembler les parties, la languette d'une partie est insérée dans la rainure d'une autre partie.

2. Procédé selon la revendication 1, dans lequel la pièce rapportée est fendue et est modifiée par assemblage de la pièce rapportée fendue.

3. Procédé selon l'une quelconque des revendications 1 et 2, dans lequel la pièce rapportée est modifiée par ajout de boulons, vis ou broches.

4. Procédé selon l'une quelconque des revendications 1 à 3, dans lequel un contour est découpé dans au moins un bord de la pièce rapportée.

5. Procédé selon l'une quelconque des revendications 1 à 4, dans lequel la pièce rapportée est fabriquée à partir d'un métal, d'un polymère ou d'une céramique.

6. Procédé selon l'une quelconque des revendications 1 à 5, dans lequel le polymère thermoplastique dont est constituée la partie en plastique (17) est renforcé.
